# EUROPÄISCHE PATENTSCHRIFT

(11) **EP 2 065 265 B1**
(45) Veröffentlichungstag und Bekanntmachung des Hinweises auf die Patenterteilung: **10.02.2010**
(21) Anmeldenummer: 07023916.5
(22) Anmeldetag: 27.11.2007
(51) Int. Cl.: B60R 21/237

(54) **Vorrichtung und Verfahren zum Falten eines Luftsacks**
Device and method for folding an airbag
Dispositif et procédé destinés à plier une poche d'air

(43) Veröffentlichungstag der Anmeldung: 03.06.2009
(73) Patentinhaber: Delphi Technologies, Inc., Troy, Michigan 48007 (US)
(72) Erfinder: Imaide, Stefan, 45527 Hattingen (DE); Ortmann, Sven, 15370 Fredersdorf (DE)
(74) Vertreter: Denton, Michael John

(56) Entgegenhaltungen:
- EP-A- 0 972 683
- WO-A-00/15467
- DE-A1-102004 028 048
- US-A1- 2003 171 200
- US-A1- 2005 269 807

## Beschreibung

Die vorliegende Erfindung betrifft eine Vorrichtung sowie ein Verfahren zum Erzeugen eines vorbestimmten Faltenmusters in der Hülle eines aufblasbaren Luftsacks, d.h. zum Falten eines Luftsacks.

Üblicherweise wird ein Luftsack auf eine Packungsgröße komprimiert bzw. zusammengefaltet, die es gestattet, den gefalteten Luftsack als Teil eines Luftsackmoduls beispielsweise als Fahrer-, Beifahrer- oder Seitenairbag in einem Fahrzeug zu montieren. Hierbei muss der Luftsack so gefaltet werden, dass er sich beim Aufblasen im Falle eines Unfalls schnell und ohne Beschädigungen der Luftsackhülle in einer gewünschten Weise entfalten kann.

Eine Vorrichtung gemäβ dem Oberbegriff des Anspruch 1 ist aus EP0 972 683 bekannt.

Der Erfindung liegt die Aufgabe zugrunde, ein Verfahren zum Erzeugen eines vorbestimmten Faltenmusters in der Hülle eines aufblasbaren Luftsacks sowie eine nach dem Verfahren arbeitende Vorrichtung zu schaffen, welche es ermöglichen, einen Luftsack möglichst einfach und schnell zusammenzufalten, so dass sich dieser optimal und insbesondere ohne Beschädigungen der Luftsackhülle entfalten kann.

Die Lösung dieser Aufgabe erfolgt gemäß einem Aspekt der Erfindung durch die Merkmale des die Vorrichtung betreffenden Anspruchs 1 und insbesondere dadurch, dass eine Blende sowie ein durch die Blende hindurch verschiebbarer Stempel vorgesehen ist, wobei die Blende zumindest bereichsweise eine derart ausgebildete Kontur aufweist, dass in der Hülle eines von dem Stempel durch die Blende hindurch gezogenen Luftsacks ein vorbestimmtes Faltenmuster mit parallel zueinander verlaufenden Falten erzeugt werden kann. Sofern im Rahmen der vorliegenden Erfindung der Begriff "Blende" verwendet wird, so ist hierunter entsprechend einer optischen Blende eine durch eine Berandung bzw. Kontur zumindest teilweise begrenzte Öffnung oder Aussparung zu verstehen, welche den durch sie hindurch gezogenen Luftsack beim Hindurchziehen bündelt bzw. einschnürt.

Dadurch, dass durch das Hindurchziehen des Luftsacks durch die Blende in der Hülle desselben eine Vielzahl parallel zueinander verlaufender Falten erzeugt wird, lässt sich dann anschließend der Luftsack in Längsrichtung der Falten komprimieren und z.B. in das Gehäuse eines Luftsackmoduls einbringen. Indem mit der erfindungsgemäßen Vorrichtung zunächst ein vorbestimmtes Faltenmuster mit parallel zueinander verlaufenden Falten in der Hülle des Luftsacks erzeugt wird, kann sichergestellt werden, dass sich die Hülle des Luftsacks während des anschließenden Komprimierens bzw. Zusammendrückens des Luftsacks in Längsrichtung der Falten nicht chaotisch verformt und verfaltet. Vielmehr kann dadurch, dass zunächst eine Vielzahl parallel zueinander verlaufender Falten in der Hülle des Luftsacks erzeugt wird, während des Komprimierens desselben ein geordnetes bzw. homogenes Zusammenfalten der Luftsackhülle sichergestellt werden, so dass sich der Luftsack optimal entfalten kann, wodurch letztendlich das Verletzungsrisiko für die Fahrzeuginsassen minimiert wird.

Bevorzugte Ausführungsformen der erfindungsgemäßen Vorrichtung ergeben sich aus den abhängigen Ansprüchen, der Beschreibung sowie den Zeichnungen.

So kann die Kontur der Blende gemäß einer Ausführungsform beispielsweise eine Vielzahl an Rück- und Vorsprüngen aufweisen, welche abwechselnd zueinander angeordnet sind. Hierdurch kann in der gewünschten Weise die Erzeugung des vorbestimmten Faltenmusters mit parallel zueinander verlaufenden Falten in der Hülle des Luftsacks realisiert werden. Wenn der Luftsack durch die Vorschubbewegung des Stempels der Vorrichtung durch die Blende hindurch gezogen wird, wird die Luftsackhülle gewissermaßen durch die Rück- und Vorsprünge in der Kontur der Blende gekämmt, so dass die Hülle in Falten gelegt wird.

Bei den Rück- und Vorsprüngen kann es sich somit ähnlich wie bei einem Kamm um Zinken oder beabstandet zueinander angeordnete Zähne handeln, deren Kanten abgeflacht und vorzugsweise abgerundet sind, um bei dem Hindurchziehen des Luftsacks durch die Blende Beschädigungen der Luftsackhülle zu vermeiden.

Insbesondere aus Gründen der Qualitätssicherung und -kontrolle kann es sich als vorteilhaft erweisen, die Blende in einer Arbeitsplatte auszubilden, welche zumindest so groß ist, dass der zu faltende Luftsack auf der Arbeitsplatte vollständig ausgebreitet werden kann. Bevor der Luftsack mit dem Stempel der Vorrichtung durch die Blende hindurch gezogen wird, kann der Luftsack somit auf der Arbeitsplatte in eine fest vorgegebene Ausgangslage gebracht bzw. gelegt werden, in welcher er die Blende vollständig überspannt bzw. überdeckt. Hierdurch kann die Reproduzierbarkeit des zu erzeugenden Faltenmusters in der Luftsackhülle sowie die Entfaltungscharakteristik des Luftsacks verbessert werden.

Gemäß einer weiteren Ausführungsform kann die Blende eine geschlossene Kontur aufweisen, wodurch sich über den gesamten Umfang der Luftsackhülle hinweg ein vorbestimmtes Faltenmuster erzeugen lässt. Diese Ausführungsform erweist sich insbesondere dann als vorteilhaft, wenn - wie beispielsweise bei einem Fahrerairbag - besonderer Wert darauf gelegt wird, dass sich der Luftsack über seinen Umfang hinweg gleichmäßig ausbreiten können soll.

Wenn es sich hingegen bei dem zu faltenden Luftsack um einen Luftsack handelt, welcher sich nur in eine bestimmte Richtung ausbreiten können soll, wie dies beispielsweise bei einem Seitenairbag der Fall ist, so kann es ausreichen, eine Blende mit einer offenen Kontur zu verwenden, so dass nur in dem Bereich, in dem der Luftsack mit der Blende zusammenwirkt, ein vorbestimmtes Faltenmuster in der Luftsackhülle erzeugt wird. Eine Blende mit einer offenen Kontur kann sich ferner dahingehend als vorteilhaft erweisen, dass die Führung sowie der Antrieb für den Stempel durch den offenen Bereich der Blende nach außen z.B. zu einer Art Kulissenführung hingeführt werden kann, was einen verhältnismäßig einfachen Aufbau der Vorrichtung ermöglicht.

Um eine hinterschnittfreie Faltengebung in der Hülle des Luftsacks sicherzustellen, ist gemäß einer weiteren Ausführungsform vorgesehen, dass der Stempel eine rohrförmige Gestalt aufweist und ferner ein Gegenstempel vorgesehen ist, welcher infolge der Vorschubbewegung des Stempels durch die Blende von diesem umgeben wird. Insbesondere stülpt sich der Stempel während seiner Vorschubbewegung durch die Blende hindurch über den auf der anderen Seite der Blende befindlichen Gegenstempel. Während der Vorschubbewegung des Stempels durch die Blende hindurch wird der Luftsack durch die Blende hindurch gezogen, wobei er an dem freien Rohrende des Stempels eine Richtungsänderung erfährt und zwischen der Außenseite des Gegenstempels und der Innenseite des rohrförmigen Stempels zu liegen kommt. Zwischen dem rohrförmigen Stempel und dem kleineren Gegenstempel entsteht somit ein als Faltraum oder Faltkanal dienender Ringraum, in welchem die Luftsackhülle anschließend längs der zuvor erzeugten Falten komprimiert bzw. zusammengedrückt werden kann. Die dadurch entstehende ringförmige Faltung des Luftsacks ermöglicht ein ungehindertes radiales und axiales Entfalten der Luftsackhülle, da einander gegenüberliegende Bereiche der Luftsackhülle durch den Gegenstempel voneinander getrennt bzw. auf Abstand gehalten sind und sich somit während des Zusammendrückens nicht übereinander legen können.

Zwar gelangt der Luftsack, wenn er mit dem rohrförmigen Stempel durch die Blende hindurch gezogen wird, unweigerlich mit dem Kopf des Gegenstempels in Anlage; um jedoch die Reproduzierbarkeit der Faltenbildung noch weiter zu verbessern, kann gemäß einer weiteren Ausführungsform innerhalb des Stempels ein unabhängig von dem Stempel durch die Blende verschiebbarer Kolben vorgesehen sein, an dessen freien Ende der zu faltende Luftsack lösbar anbringbar ist. Wie bereits erwähnt, dient dieser Kolben zum einen zur Befestigung des Luftsacks und somit zur Erzeugung einer fest vorgegebenen Ausgangslage des Luftsacks. Darüber hinaus dient der genannte Kolben dazu, den Luftsack, nachdem dieser in den Ringraum zwischen dem Gegenstempel und dem rohrförmigen Stempel gezogen wurde, innerhalb des Ringraums zu komprimieren. Hierzu wird der Kolben zur Verkleinerung des Ringraums in axialer Richtung innerhalb des rohrförmigen Stempels durch die Blende hindurch geschoben, wobei gleichzeitig der Gegenstempel zurück gezogen bzw. mittels des Kolbens zurückgedrückt wird, um die Verkleinerung des Ringraums zu ermöglichen.

Um die Reproduzierbarkeit der Faltenerzeugung in der Luftsackhülle noch weiter zu verbessern, kann ferner eine Abdeckplatte vorgesehen sein, welche oberhalb der Arbeitsplatte und beabstandet zu derselben angeordnet ist. Die Abdeckplatte weist oberhalb der Blende der Arbeitsplatte eine Aussparung auf, um den Zugang des Stempels sowie des darin verschiebbaren Kolbens zu der Blende zu ermöglichen. Die Abdeckplatte braucht dabei nur wenige Millimeter oberhalb der Arbeitsplatte angeordnet zu sein, was es erforderlich macht, den Luftsack flach ausgebreitet in dem Zwischenraum zwischen der Abdeckplatte und der Arbeitsplatte anzuordnen. Die Bedienperson der erfindungsgemäßen Vorrichtung wird somit gewissermaßen dazu gezwungen, den Luftsack ordentlich und glatt in eine fest vorgegebene Ausgangslage auszubreiten, wodurch die Reproduzierbarkeit der Faltenerzeugung weiter verbessert wird.

Gemäß einem weiteren Aspekt wird die der Erfindung zugrunde liegende Aufgabe außerdem durch die Merkmale des das Verfahren betreffenden unabhängigen Anspruchs gelöst. In Bezug auf das erfindungsgemäße Verfahren sei an dieser Stelle erwähnt, dass sich sämtliche zuvor unter Bezugnahme auf die erfindungsgemäße Vorrichtung beschriebenen Merkmale in entsprechender Weise auf das erfindungsgemäße Verfahren übertragen lassen.

Bei dem erfindungsgemäßen Verfahren wird zunächst ein Luftsack auf einer Arbeitsplatte ausgebreitet, welche eine Blende aufweist, die zumindest bereichsweise eine derart ausgebildete Kontur aufweist, dass beim Hindurchziehen des Luftsacks durch die Blende in der Luftsackhülle des Luftsacks ein vorbestimmtes Faltenmusters erzeugt wird. Nachdem der Luftsack die Blende überdeckend auf der Arbeitsplatte angeordnet wurde, wird der Luftsack bei dem erfindungsgemäßen Verfahren anschließend durch die Blende hindurch gezogen, wodurch in der gewünschten Weise in der Hülle das vorbestimmte Faltenmuster mit einer Vielzahl von parallel zueinander verlaufenden Falten erzeugt wird.

Zwar wäre es möglich, den Luftsack von Hand durch die Blende hindurch zu ziehen; um jedoch die Reproduzierbarkeit der Faltenerzeugung zu verbessern und das Verfahren zu automatisieren, ist gemäß einer bevorzugten Ausführungsform vorgesehen, den Luftsack durch die Blende zu ziehen, indem ein Stempel durch dieselbe hindurch geschoben wird. Der Stempel kann hierbei in der voran beschriebenen Art und Weise eine rohrförmige Gestalt aufweisen, so dass während der Vorschubbewegung des Stempels durch die Blende der Luftsack über einen Gegenstempel gestülpt werden kann.

Weitere vorteilhafte Ausführungsformen des erfindungsgemäßen Verfahrens ergeben sich aus den abhängigen Ansprüchen, der Beschreibung der erfindungsgemäßen Vorrichtung, der nachfolgenden Figurenbeschreibung sowie den Zeichnungen.

Im Folgenden wird die vorliegende Erfindung rein beispielhaft anhand eines Ausführungsbeispiels unter Bezugnahme auf die beigefügten Figuren beschrieben, wobei:
- Fig. 1: eine Schnittansicht durch die erfindungsgemäße Vorrichtung in einer Ausgangsstellung zeigt;
- Fig. 2: eine Schnittansicht durch die erfindungsgemäße Vorrichtung in einer Arbeitsstellung zeigt;
- Fig. 3: eine Schnittansicht durch die erfindungsgemäße Vorrichtung in einer weiteren Arbeitsstellung zeigt; und
- Fig. 4a - 4c: drei unter Verwendung unterschiedlicher Blenden gefaltete Luftsäcke zeigt.

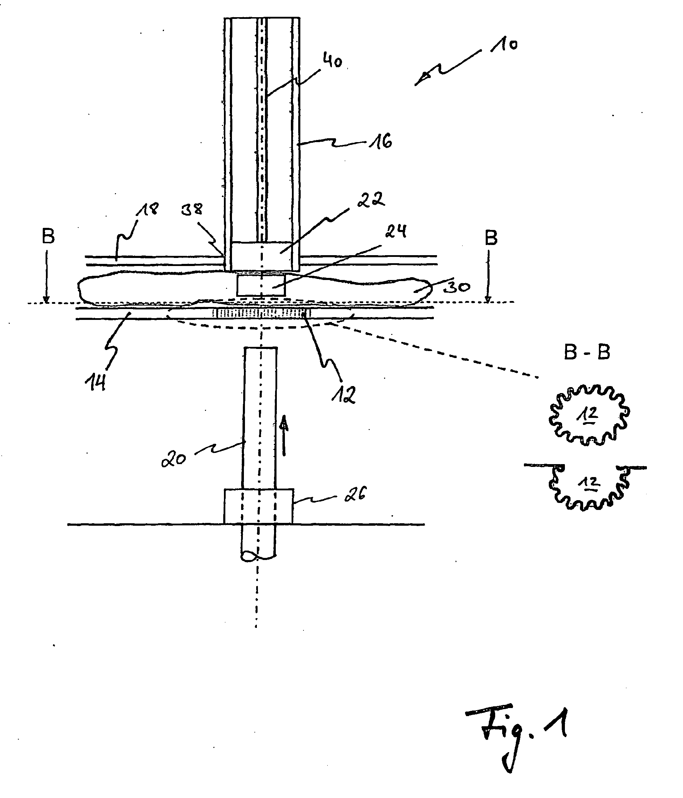

Zunächst wird unter Bezugnahme auf die Fig. 1 bis 3 der Aufbau der erfindungsgemäßen Vorrichtung 10 zum Erzeugen eines vorbestimmten Faltenmusters in der Hülle eines aufblasbaren Luftsacks 30 beschrieben.

Die erfindungsgemäße Vorrichtung 10 weist eine horizontale Arbeitsplatte 14 auf, in der eine Blende 12 ausgebildet ist, welche eine geschlossene oder offene Kontur aufweisen kann, wie sich dies der Draufsicht gemäß Schnitt B-B entnehmen lässt. In der dargestellten Ausführungsform weist die Blende 12 eine Vielzahl von Rück- und Vorsprüngen 36, 34 auf, welche abwechselnd zueinander angeordnet sind und somit eine Vielzahl von Zinken oder Fingern bilden. Die Rück- und Vorsprünge 36, 34 weisen dabei eine abgerundete Gestalt auf, so dass sich gewissermaßen eine serpentinenförmige, mäandernde bzw. wellenförmige Blendenkontur ergibt.

Oberhalb und beabstandet zu der Arbeitsplatte 14 ist eine Abdeckplatte 18 angeordnet, welche oberhalb der Blende 12 der Arbeitsplatte 14 eine Aussparung 38 aufweist. Zwischen der Arbeitsplatte 14 und der Abdeckplatte 18 ist ein nur wenige Millimeter hoher Zwischenraum gebildet, in welchem ein unter Verwendung der erfindungsgemäßen Vorrichtung 10 zu faltender Luftsack 30 flächig auszubreiten ist, wie dies in der Fig. 1 dargestellt ist.

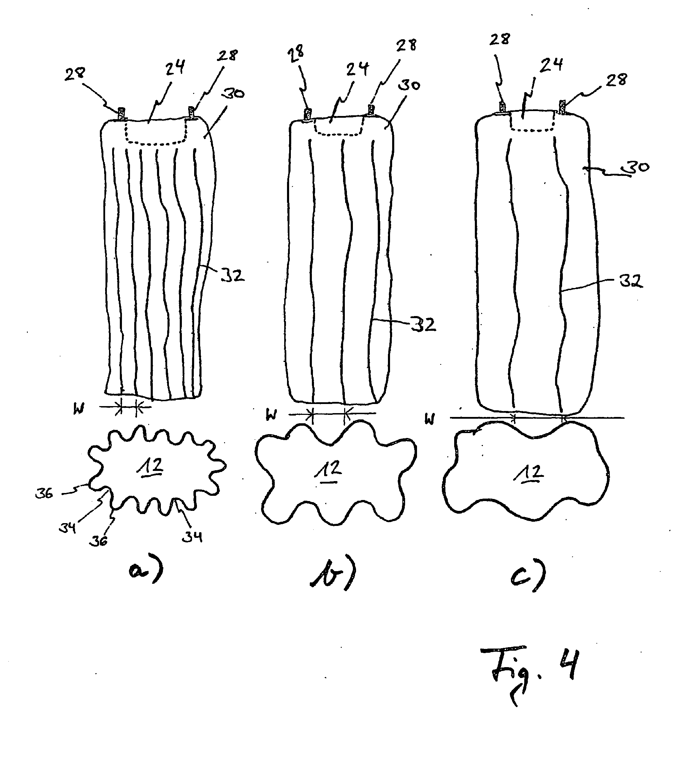

Die erfindungsgemäße Vorrichtung 10 weist ferner einen rohrförmigen und vorzugsweise hohlzylindrischen Stempel 16 auf, welcher derart positioniert ist, dass er durch die Aussparung 38 der Abdeckplatte 18 und die mit der Aussparung 38 fluchtende Blende 12 von oben hindurch geschoben werden kann. Innerhalb des rohrförmigen Stempels 16 ist ein unabhängig von dem Stempel 16 durch die Aussparung 38 und die Blende 12 verschiebbarer Kolben 22 vorgesehen, der passgenau in dem Stempel 16 angeordnet ist. Der Kolben 22 ist dabei an einer Kolbenstange 40 befestigt, durch deren Betätigung der Kolben 22 innerhalb des Stempels 16 verschoben werden kann. An der Unterseite weist der Kolben 22 mehrere Befestigungsausnehmungen (nicht dargestellt) auf, welche dazu dienen, den Luftsack 30 daran zu befestigen. Genauer gesagt weist der Luftsack 30 einen Gasgenerator 24 auf, welcher aus dem Luftsack 30 herausragende Befestigungszapfen 28 (siehe Fig. 4) aufweist, über die der Luftsack 30 in den zuvor erwähnten Befestigungsausnehmungen an der Unterseite des Kolbens 22 befestigt werden kann.

Zusätzlich zu dem Stempel 16 weist die erfindungsgemäße Vorrichtung 10 ferner einen zylindrischen Gegenstempel 20 auf, welcher aus einem unterhalb der Arbeitsplatte 14 befindlichen Druckstück 26 in Richtung der Arbeitsplatte 14 und durch die Blende 12 derselben verfahrbar ist. Der Gegenstempel 20 lässt sich dabei so weit nach oben verfahren, bis er mit dem Luftsack 30 und insbesondere mit dem Gasgenerator 24 in Anlage gelangt, so dass der Gasgenerator 24 zum einen über die Befestigungszapfen 28 an dem Kolben 22 und andererseits durch den Gegenstempel 20 in seiner Lage gesichert ist. Es könnte grundsätzlich auch auf die Befestigungszapfen 28 zur Lagesicherung verzichtet werden.

Im Folgenden werden nun die Arbeitsweise der erfindungsgemäßen Vorrichtung 10 sowie das erfindungsgemäße Verfahren zum Erzeugen eines vorbestimmten Faltenmusters in der Hülle des aufblasbaren Luftsacks 30 erläutert.

In der Ausgangsstellung der Vorrichtung 10 gemäß der Fig. 1 befindet sich sowohl der Stempel 16 als auch der Kolben 22 in seiner zurückgezogenen Stellung, in der der Stempel 16 nicht oder nur geringfügig in den Zwischenraum zwischen der Abdeckplatte 18 und der Arbeitsplatte 14 eintaucht. In dieser Ausgangsstellung der Vorrichtung 10 wird damit begonnen, einen Luftsack 30 in dem Zwischenraum zwischen der Abdeckplatte 18 und der Arbeitsplatte 14 auf der Arbeitsplatte 14 auszubreiten. Der Luftsack 30 wird dabei so auf der Arbeitsplatte 14 positioniert, dass sich der Gasgenerator 24 des Luftsacks 30 im Bereich bzw. oberhalb der Blende 12 befindet. Zur Lagesicherung des Luftsacks 30 wird dieser über die zuvor bereits erwähnten Befestigungszapfen 28, welche von der Oberseite des Gasgenerators 24 abstehen, an der Unterseite des Kolbens 22 befestigt. Sobald der Luftsack 30 an dem Kolben 22 befestigt und vollständig auf der Arbeitsplatte 14 ausgebreitet ist, überspannt bzw. überdeckt die Hülle des Luftsacks 30 vollständig die Blende 12.

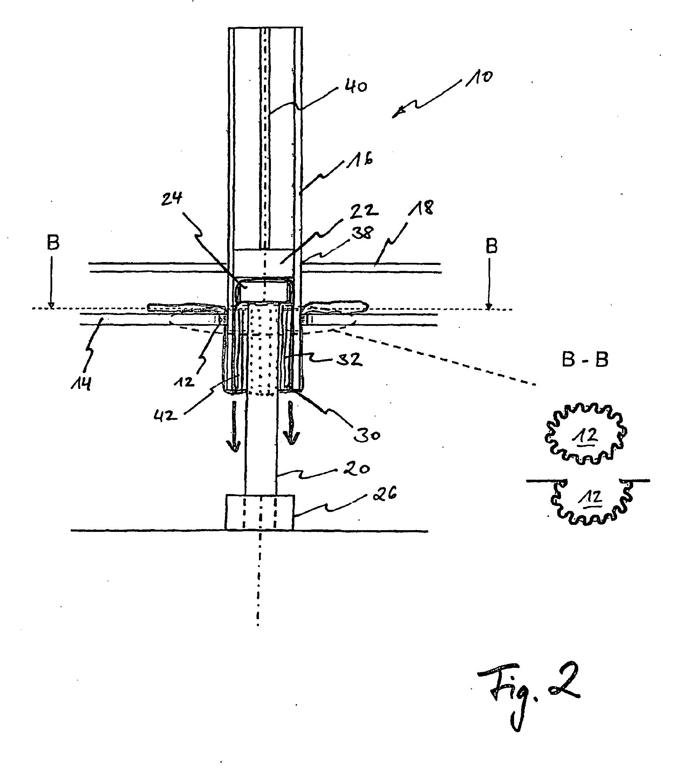

Anschließend wird der Gegenstempel 20 durch das Druckstück 26 und die Blende 12 soweit nach oben verfahren, bis er die Unterseite des Luftsacks 30 berührt. Danach wird der rohrförmige Stempel 16 durch die Aussparung 38 in den Zwischenraum zwischen der Abdeckplatte 18 und der Arbeitsplatte 14 nach unten verfahren, wobei sich der Kolben 22 zunächst nicht bewegt. Kurz bevor der Stempel 16 dann bei seiner weiteren Vorschubbewegung in die Blende 12 eindringt, gelangt er mit seinem unteren Ende an der Hülle des Luftsacks 30 in Anlage, so dass bei fortgesetzter Vorschubbewegung des Stempels 16 durch die Blende 12 der Luftsack 30 durch die Blende 12 hindurch gezogen wird (siehe Fig. 2). Hierbei wird der Luftsack 30 an der Unterkante des Stempels 16 gewissermaßen umgelenkt und kommt letztendlich in dem Ringraum 42 zwischen dem rohrförmigen Stempel 16 und dem Gegenstempel 20 zu liegen.

Infolge des Hindurchziehens des Luftsacks 30 durch die Blende 12 wird in der Hülle des Luftsacks 30 in der gewünschten Weise ein vorbestimmtes Faltenmuster mit parallel zueinander verlaufenden Falten 32 erzeugt, deren Form, Größe und Abstand von der Kontur der Blende 12 abhängt (siehe Fig. 4). So wird beim Hindurchziehen des Luftsacks 30 durch die Blende 12 die Luftsackhülle gewissermaßen mittels der Vor- und Rücksprünge 34, 36, die die Kontur der Blende 12 definieren, gekämmt, so dass je nach Abstand W (Fig. 4) der Vor- und Rücksprünge 34, 36 die Falten 32 einen geringeren (siehe beispielsweise Fig. 4a) bzw. einen größeren Abstand W (siehe beispielsweise Fig. 4c) zueinander aufweisen.

Wenn der Stempel 16 soweit durch die Blende 12 vorgeschoben ist, dass er an dem Druckstück 26 anliegt, ist der Luftsack 30 infolge der Vorschubbewegung des Stempels 16 vollständig durch die Blende 12 hindurch gezogen worden, so dass sich der Luftsack 30 vollständig in dem Ringraum 42 befindet, in welchem er von dem Gasgenerator 24 schlaff nach unten hängt. Durch den Gegenstempel 20 wird dabei verhindert, dass sich einander gegenüberliegende Abschnitte des Luftsacks 30 gegenseitig berühren, während der Luftsack 30 infolge der Vorschubbewegung des Stempels 16 in den von dem Stempel 16 gebildeten Innenraum hineingezogen wird, wodurch beim im Folgenden beschriebenen Zusammendrücken des Luftsacks 30 eine hinterschnittfreie Faltung erreicht werden kann.

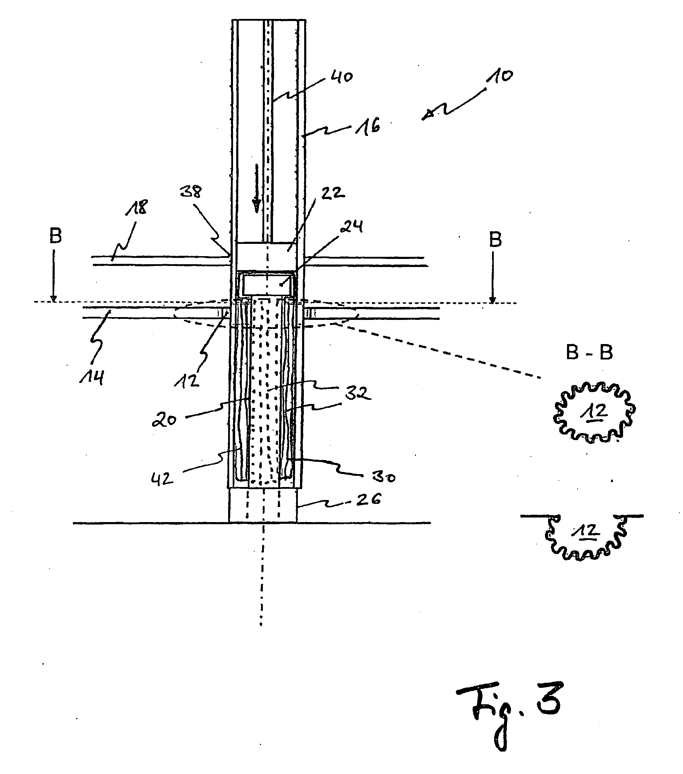

Wenn sich der Luftsack 30 in der in Fig. 3 dargestellten schlaff nach unten hängenden Lage befindet, kann der Luftsack 30 in Längsrichtung der Stempelanordnung 16, 20 zusammengedrückt bzw. zurückgedrückt werden, indem der Kolben 22 durch Betätigung der Kolbenstange 40 nach unten verfahren wird. Dabei wird gleichzeitig der Gegenstempel 20 durch das Druckstück 26 zurückgezogen, so dass während der Verkleinerung des Ringraums 42 und des damit einhergehenden Zusammendrückens des Luftsacks 30 durch den Gegenstempel 20 verhindert wird, dass beim Zusammendrücken des Luftsacks 30 sich einander gegenüberliegende Abschnitte des Luftsacks 30 miteinander verzahnen oder verhaken oder sich übereinander legen. Somit wird eine homogene Faltung der Luftsackhülle 30 sichergestellt.

Nachdem der Luftsack 30 infolge der Vorschubbewegung des Kolbens 22 und der damit einhergehenden Verkleinerung des Ringraums 42 zusammengedrückt und dabei homogen gefaltet wurde, kann der gefaltete Luftsack 30 in ein bereitstehendes Gehäuse eines Luftsackmoduls eingebracht werden.

### Bezugszeichenliste

- 10: Vorrichtung
- 12: Blende
- 14: Arbeitsplatte
- 16: Stempel
- 18: Abdeckplatte
- 20: Gegenstempel
- 22: Kolben
- 24: Gasgenerator
- 26: Druckstück
- 28: Befestigungszapfen
- 30: Luftsack
- 32: Falten
- 34: Vorsprung, Zinken
- 36: Rücksprung
- 38: Aussparung
- 40: Kolbenstange
- 42: Ringraum

- W: Abstand von 34

## Patentansprüche

1. Vorrichtung zum Falten eines aufblasbaren Luftsacks (30), mit
- einer Blende (12); und
- einem durch die Blende (12) verschiebbaren Stempel (16), **dadurch gekennzeichet, dass** die Blende (12) zumindest bereichsweise eine derart ausgebildete Kontur aufweist, dass in der Hülle eines von dem Stempel (16) durch die Blende (12) hindurch gezogenen Luftsacks (30) ein vorbestimmtes Faltenmuster mit parallel zueinander verlaufenden Falten (32) erzeugbar ist.

2. Vorrichtung nach Anspruch 1,
**dadurch gekennzeichnet, dass**
die Kontur der Blende (12) eine Vielzahl von Rück- und Vorsprüngen (36, 34) aufweist, welche abwechselnd zueinander angeordnet sind.

3. Vorrichtung nach Anspruch 1 oder 2,
**dadurch gekennzeichnet, dass**
die Kontur der Blende (12) eine Vielzahl von Zinken aufweist, deren Kanten vorzugsweise abgerundet sind.

4. Vorrichtung nach zumindest einem der vorstehenden Ansprüche,
**dadurch gekennzeichnet, dass**
die Blende (12) in einer Arbeitsplatte (14) ausgebildet ist, welche zumindest so groß ist, dass der zu faltende Luftsack (30) vollständig darauf ausbreitbar ist.

5. Vorrichtung nach zumindest einem der vorstehenden Ansprüche,
**dadurch gekennzeichnet, dass**
die Blende (12) eine geschlossene Kontur aufweist.

6. Vorrichtung nach zumindest einem der Ansprüche 1 bis 4,
**dadurch gekennzeichnet, dass**
die Blende (12) eine offene Kontur aufweist.

7. Vorrichtung nach zumindest einem der vorstehenden Ansprüche,
**dadurch gekennzeichnet, dass**
der Stempel (16) eine rohrförmige Gestalt aufweist und ferner ein Gegenstempel (20) vorgesehen ist, wobei der Stempel (16) und der Gegenstempel (20) relativ zueinander bewegbar sind und in einer Relativstellung einen Raum (42) für die Luftsackhülle begrenzen.

8. Vorrichtung nach zumindest einem der vorstehenden Ansprüche,
**dadurch gekennzeichnet, dass**
innerhalb des Stempels (16) ein unabhängig von dem Stempel (16) durch die Blende (12) verschiebbarer Kolben (22) vorgesehen ist, an dem der zu faltende Luftsack (30) lösbar anbringbar ist.

9. Vorrichtung nach zumindest einem der vorstehenden Ansprüche,
**dadurch gekennzeichnet, dass**
ferner eine Abdeckplatte (18) vorgesehen ist, welche oberhalb der Arbeitsplatte (14) beabstandet zu derselben angeordnet ist, und welche oberhalb der Blende (12) der Arbeitsplatte (14) eine Aussparung aufweist.

10. Verfahren zum Falten eines aufblasbaren Luftsacks (30), mit den Schritten:
- Ausbreiten des Luftsacks (30) auf einer Arbeitsplatte (14), welche eine Blende (12) aufweist, die zumindest bereichsweise eine derart ausgebildete Kontur aufweist, dass beim Hindurchziehen des Luftsacks (30) durch die Blende (12) in der Hülle des Luftsacks (30) ein vorbestimmtes Faltenmuster (32) erzeugt wird; und
- Hindurchziehen des Luftsacks (30) durch die Blende (12).

11. Verfahren nach Anspruch 10,
**dadurch gekennzeichnet, dass**
der Luftsack (30) durch die Blende (12) hindurch gezogen wird, indem ein Stempel (16) durch die Blende (12) geschoben wird.

12. Verfahren nach Anspruch 10 oder 11,
**dadurch gekennzeichnet, dass**
während der Bewegung des Stempels (16) durch die Blende (12) der Luftsack (30) über einen Gegenstempel (20) gestülpt wird.

## Claims

1. Device for folding an inflatable airbag (30), comprising
a blind (12); and
a stamp (16) displaceable through the blind (12),
**characterized in that** the blind (12) includes a contour at least in regions, the contour configured such that a predetermined fold pattern with parallel folds (32) can be generated in the sleeve of an airbag (30) pulled through the blind (12) by the stamp (16).

2. Device according to claim 1,
**characterized in that** the contour of the blind (12) includes a plurality of recesses and projections (36, 34) arranged in an alternate manner.

3. Device according to claim 1 or 2,
**characterized in that** the contour of the blind (12) comprises a plurality of teeth, whose edges are preferably rounded.

4. Device according to at least one of the preceding claims,
**characterized in that** the blind (12) is formed in a work plate (14), which is at least large enough that the airbag (30) to be folded is completely spreadable thereon.

5. Device according to at least one of the preceding claims,
**characterized in that** the blind (12) comprises a closed contour.

6. Device according to one of the claims 1 to 4,
**characterized in that** the blind (12) comprises an open contour.

7. Device according to at least one of the preceding claims,
**characterized in that** the stamp (16) has a tubular shape and further a counter stamp (20) is provided, wherein the stamp (16) and the counter stamp (20) are movable relative to each other and limit a space (42) for the air bag sleeve in a relative position.

8. Device according to at least one of the preceding claims,
**characterized in that** within the stamp (16) a piston (22) is provided, slidable through the blind (12) independently of the stamp (16) whereat the airbag (30) to be folded can be attached releasable.

9. Device according to at least one of the preceding claims,
**characterized in that** further a cover plate (18) is provided, disposed above the work plate (14) spaced apart and comprising a recess above the blind (12) of the work plate (14).

10. Method for folding an inflatable airbag (30), comprising the steps:
spreading the airbag (30) on a work plate (14) comprising a blind (12), that includes a contour at least in regions, the contour configured such that a predetermined fold pattern (32) is generated in the sleeve of the airbag (30) when pulling the airbag (30) through the blind (12); and
pulling the airbag (30) through the blind (12).

11. Method according to claim 10,
**characterized in that** the airbag (30) is pulled through the blind (12) by pushing a stamp (16) through the blind (12).

12. Method according to claim 10 or 11,
**characterized in that** during the movement of the stamp (16) through the blind (12) the airbag (30) is put over a counter stamp (20).

## Revendications

1. Dispositif pour plier une poche à air gonflable (30), comprenant
- un cache (12) ; et
- un poinçon (16) susceptible d'être déplacé à travers le cache (12),
**caractérisé en ce que** le cache (12) présente au moins localement un contour réalisé de telle manière qu'il est possible d'engendrer dans l'enveloppe d'une poche à air (30) tirée par le poinçon (16) à travers le cache (12) un motif de plis prédéterminé avec des plis (32) s'étendant parallèlement les uns aux autres.

2. Dispositif selon la revendication 1,
**caractérisé en ce que** le contour du cache (12) comprend une pluralité de ressaut et de saillies (36, 34) qui sont agencés en alternance les uns par rapport aux autres.

3. Dispositif selon la revendication 1 ou 2,
**caractérisé en ce que** le cache (12) comprend une pluralité de dents, dont les arêtes sont de préférence arrondies.

4. Dispositif selon l'une au moins des revendications précédentes,
**caractérisé en ce que** le cache (12) est réalisé dans une plaque de travail (14) qui est au moins aussi grande que la poche à air (30) qu'il s'agit de plier peut être étalée totalement sur celle-ci.

5. Dispositif selon l'une au moins des revendications précédentes,
**caractérisé en ce que** le cache (12) présente un contour fermé.

6. Dispositif selon l'une au moins des revendications 1 à 4,
**caractérisé en ce que** le cache (12) présente un contour ouvert.

7. Dispositif selon l'une au moins des revendications précédentes,
**caractérisé en ce que** le poinçon (16) présente une configuration de forme tubulaire, et **en ce qu'**il est de préférence prévu un poinçon antagoniste (20), tels que le poinçon (16) et le poinçon antagoniste (20) sont déplaçables l'un par rapport à l'autre et délimitent, dans une position relative, un espace (42) pour l'enveloppe de la poche à air.

8. Dispositif selon l'une au moins des revendications précédentes,
**caractérisé en ce qu'**il est prévu à l'intérieur du poinçon (16) un piston déplaçable (22) à travers le cache (12) indépendamment du poinçon (16) et sur lequel la poche à air (30) peut être posée de manière détachable.

9. Dispositif selon l'une au moins des revendications précédentes,
**caractérisé en ce qu'**il est en outre prévu une plaque de couverture (18), laquelle est agencée au-dessus de la plaque de travail (14) à distance de celle-ci, et qui comporte un évidement au-dessus du cache (12) de la plaque de travail (14).

10. Procédé pour plier une poche à air gonflable (30), comprenant les étapes suivantes :
- étalement de la poche à air (30) sur une plaque de travail (14) qui comprend un cache (12), celui-ci présentant au moins localement un contour réalisé de telle façon qu'en tirant la poche à air (30) à travers le cache (12) on génère dans l'enveloppe de la poche à air (30) un motif de plis prédéterminé (32) ; et
- traction de la poche à air (30) à travers le cache (12).

11. Procédé selon la revendication 10,
**caractérisé en ce que** la poche à air (30) est tirée à travers le cache (12) en enfilant un poinçon (16) à travers le cache (12).

12. Procédé selon la revendication 10 ou 11,
**caractérisé en ce que** pendant le mouvement du poinçon (16) à travers le cache (12), la poche à air (30) est retroussée par-dessus un poinçon antagoniste (20).
